**Europäisches Patentamt**

**European Patent Office**

**Office européen des brevets**

(19)

(11) Veröffentlichungsnummer: **0 198 176 B1**

(12) **EUROPÄISCHE PATENTSCHRIFT**

(45) Veröffentlichungstag der Patentschrift:
07.11.90

(51) Int. Cl.⁵: **H04M 3/42, H04M 1/00**

(21) Anmeldenummer: **86102181.4**

(22) Anmeldetag: **20.02.86**

(54) Verfahren zur Benachrichtigung eines Fernsprechteilnehmers über die für seinen Anschluss bestehenden Schaltzustände.

(30) Priorität: **10.04.85 DE 3512786**

(43) Veröffentlichungstag der Anmeldung:
**22.10.86 Patentblatt 86/43**

(45) Bekanntmachung des Hinweises auf die Patenterteilung:
**07.11.90 Patentblatt 90/45**

(84) Benannte Vertragsstaaten:
**AT BE FR GB IT LU NL**

(56) Entgegenhaltungen:
**DE-A- 3 032 979**
**DE-C- 3 133 935**
**DE-C- 3 137 993**

**H. ODEN "Nachrichtenvermittlung" 1975, R. Oldenburg Verlag, München, Seiten 80-85**

(73) Patentinhaber: **TELENORMA Telefonbau und Normalzeit GmbH, Mainzer Landstrasse 128-146, D-6000 Frankfurt am Main(DE)**

(72) Erfinder: **Ernst, Ralf, Am Eichenbühl 87, D-6074 Rödermark(DE)**
Erfinder: **Korn, Peter, Dipl.-Ing., Bahnebredde 29, D-4600 Dortmund 50(DE)**

## Beschreibung

Die Erfindung betrifft ein Verfahren zur Benachrichtigung eines Fernsprechteilnehmers über die für seinen Anschluß bestehenden Schaltzustände nach dem Oberbegriff des Patentanspruches 1.

Aus dem Fachbuch "Nachrichtenvermittlung" von Hoeckley Oden, erschienen im R. Oldenbourg-Verlag München/Wien, ist es bekannt, daß ein Teilnehmer einen besonderen Wählton erhält, wenn beispielsweise das Merkmal "Ruhe vor dem Telefon" für den betreffenden Anschluß aktiviert ist. Welche Prozeduren vom Teilnehmerapparat aus vorgenommen werden können, um verschiedene Merkmale für einen Anschluß zu aktivieren, ist in dem Kapitel "Kommunikation zu anderen Zwecken" ab Seite 80 beschrieben. Auf Seite 83 ist angegeben, daß ein Teilnehmer einen besonderen Wählton bW erhält, wenn in diesem Fall das Merkmal "Ruhe vor dem Telefon" verwirklicht ist.

Merkmale, bei denen der Teilnehmer ebenfalls einen besonderen Wählton erhalten sollte, sind in der DE-PS 31 33 935 erwähnt. Es handelt sich dabei einmal um das Merkmal "Anrufsperre", welches gleichbedeutend ist mit dem Merkmal "Ruhe vor dem Telefon", und zum anderen das Merkmal "Anrufumleitung", wobei die dem betreffenden Teilnehmeranschluß zugedachten Anrufe an einer vorbestimmten anderen Stelle ankommen. In beiden Fällen kommen an dem Teilnehmeranschluß, für den derartige Merkmale aktiv sind, keine Anrufe an, weshalb der betreffende Teilnehmer durch einen besonderen Wählton auf diesen Schaltzustand seines Anschlusses aufmerksam gemacht wird. In der vorgenannten Patentschrift ist eine Schaltungsanordnung für eine Fernsprechstation in Fernsprechnebenstellenanlagen angegeben, wobei der Zustand des zugehörigen Fernsprechanschlusses während der Inanspruchnahme eines nur im aufgelegten Zustand der Teilnehmerstation möglichen Teilnehmerdienstes dem Teilnehmer mit einer Anzeigeeinrichtung mitgeteilt wird. Diese Schaltungsanordnung bewirkt, daß die im Teilnehmerapparat untergebrachte Anzeigeeinrichtung ständig betriebsbereit ist, und die Art des Zustandes ständig anzeigt, wenn ein derartiges Merkmal aktiviert ist. Voraussetzung für eine derartige Anzeige ist es, daß neben der Anzeigeeinrichtung selbst sowohl im Fernsprechapparat als auch bei der Teilnehmeranschlußschaltung Schaltmittel aufgewendet werden, die es ermöglichen, ständig Zustandssignale über die Fernsprechanschlußleitung zu übertragen und im Fernsprechapparat zu empfangen. Damit ist ein erheblicher Aufwand verbunden, und eine Mitteilung des Zustandes des Fernsprechanschlusses an den Teilnehmer ist nur möglich, wenn ein Fernsprechapparat mit besonderer Ausführung verwendet wird.

Aus der DE-A1 3 032 979 ist ein Verfahren bekannt, wobei einem Anrufer von einer zentralen Ansageeinrichtung Ansagetexte über z.B die Verfügbarkeit von Hotelzimmern übermittelt werden.

Die Aufgabe der Erfindung besteht darin, ein Verfahren zur Benachrichtigung eines Fernsprechteilnehmers über die für seinen Anschluß bestehenden Schaltzustände vorzuschlagen, wobei kein teilnehmer-individueller Aufwand erforderlich ist, und Fernsprechapparate in Normalausführung verwendet werden können. Für die Lösung dieser Aufgabe ist eine Merkmalskombination vorgesehen, wie sie im Patentanspruch 1 angegeben ist.

Damit wird in vorteilhafter Weise erreicht, daß nur an zentraler Stelle zusätzliche Aufwendungen erforderlich sind, womit bei großen Vermittlungsanlagen, insbesondere Fernsprechnebenstellenanlagen, sich eine wirtschaftliche Lösung ergibt, weil kein teilnehmer-individueller Aufwand erforderlich ist, und das Verfahren auch bei Sprechstellen in Normalausführung anwendbar ist. Die an zentraler Stelle angeordneten Schalt- und Steuereinrichtungen können leicht den betrieblichen Erfordernissen entsprechend eingestellt werden. Weiterbildungen der Erfindung ergeben sich aus den Unteransprüchen.

Ein Ausführungsbeispiel der Erfindung wird nachfolgend anhand einer Zeichnung näher erläutert.

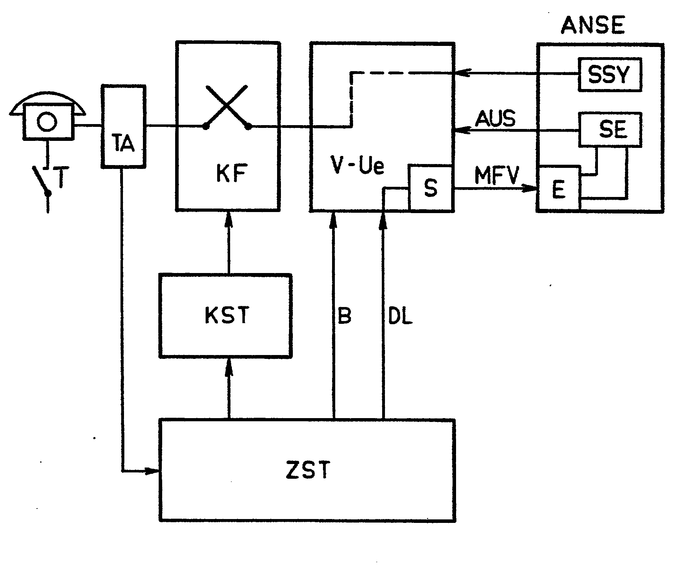

Die Zeichnung stellt ein Prinzipschaltbild einer Fernsprechnebenstellenanlage dar, an deren Koppelfeld KF Teilnehmeranschlüsse TA und Verbindungsübertragungen VUe angeschlossen sind. Über eine Koppelfeldsteuerung KST werden von der zentralen Steuerung ZST aus die einzelnen Sprechwegeverbindungen zwischen den Anschlußeinheiten hergestellt. Zur Durchführung des erfindungsgemäßen Verfahrens ist mindestens eine mit einer Ansageeinrichtung ANSE beschalteten Verbindungsübertragung VUe vorgesehen.

Wenn ein Teilnehmer einen besonderen Wählton erhält, so hat er die Möglichkeit zu erfahren, warum ihm dieser besondere Wählton zugeschaltet worden ist. Er erfährt dann, welche Merkmale für seinen Anschluß aktiviert worden sind. Um die mit der Ansageeinrichtung ANSE verbundene Verbindungsübertragung VUe anzusteuern, betätigt der Teilnehmer eine Funktionstaste T, oder er wählt eine besondere Kennzahl. Weil das Kriterium "besonderer Wählton" vorliegt stellt die zentrale Steuerung ZST eine Verbindung zwischen dem Teilnehmeranschluß TA und der Verbindungsübertragung VUe über das Koppelfeld KF her. Mit einem Belegungssignal B wird von der zentralen Steuerung ZST aus die Verbindungsübertragung VUe belegt. Aufgrund der bei diesem Vorgang erfolgenden Identifizierung des Teilnehmeranschlusses TA werden alle für diesen Teilnehmer als aktiviert eingespeicherten Merkmale in Form von Informationsdaten über eine oder mehrere Datenleitungen DL von der zentralen Steuerung ZST in die Verbindungsübertragung VUe überträgt. Sie gelangen dort zu einer Sendeeinrichtung S, die einzelne Datenworte nach dem für Tastwahl angewendeten Mehrfrequenzverfahren MFV zum Empfänger E in der Ansageeinrichtung ANSE überträgt. Die Datenworte werden in der Ansageeinrichtung ANSE empfangen und in einer Steuereinrichtung SE ausgewertet. Sie dienen zum Ansteuern einer Sprachsyntheseeinrichtung SSY, womit durch Aneinanderreihung von Wort- oder Silbenteilen, bzw. Sprachelementen Ansagetexte zusammengestellt werden. Eine derartige Ansage könnte beispielsweise lauten: "Für ihren Anschluß besteht Rufumleitung zum Anschluß 1 2 3 4." Beim Merkmal "Ruhe vor dem Telefon" lautet dann die entsprechende Ansage: "Für ihren Anschluß besteht Anrufschutz."

Durch geschickte Festlegung der Ansagetexte kann erreicht werden, daß in der Ansageeinrichtung ANSE Speicherplatz eingespart wird. Dies gilt auch für die Ansage weiterer Merkmale, die dem betreffenden Teilnehmeranschluß TA zugeordnet sind. Dabei kann es sich um die bekannten Berechtigungsklassen handeln oder auch um Zeit-Daten, die für den betreffenden Teilnehmeranschluß TA für bestimmte Ereignisse eingetragen sein können.

Wie aus der Zeichnung hervor geht, ist die Ansageeinrichtung ANSE vierdrähtig an die Verbindungsübertragung VUe angeschlossen. Dies hat den Vorteil, daß bereits Sprache ausgegeben werden kann, während noch Informationsdaten von der zentralen Steuerung ZST zur Ansageeinrichtung ANSE übertragen werden. Damit entstehen für den Teilnehmer keine unzulässig lange Wartezeiten. Falls der Teilnehmer eine Wiederholung der Ansage wünscht, kann er dies durch Nachwahl einer Kennziffer erreichen. Diese Kennziffer kann auch Bestandteil der zum Erreichen der Verbindungsübertragung VUe zu wählenden Kennzahl sein, so daß der Teilnehmer festlegen kann, wie oft er die Ansage hören will. Nach Ende der Aussendung des gesamten Ansagetextes wird von der Ansageeinrichtung ANSE ein Auslösekriterium AUS an die Verbindungsübertragung VUe gegeben, so daß von dort aus die Verbindung automatisch ausgelöst wird. Dies hat den Vorteil, daß die Verbindungsübertragung VUe und die Ansageeinrichtung ANSE nicht länger belegt bleiben, als unbedingt erforderlich ist. Falls in einer Vermittlungsanlage von derartigen Ansageeinrichtungen ANSE häufig Gebrauch gemacht wird, weil diese auch für andere Zwecke einsetzbar sind, so besteht die Möglichkeit, die Verbindungsübertragungen VUe in bekannter Weise als Sammelanschluß zu betreiben.

**Patentansprüche**

1. Verfahren zur Benachrichtigung eines Fernsprechteilnehmers über die für seinen Anschluß bestehenden Schaltzustände, wobei der Teilnehmer von einer zentralgesteuerten Vermittlungsanlage einen besonderen Wählton insbesondere dann erhält, wenn wegen aktivierter Sondermerkmale wie Anrufschutz und Rufumleitung keine Anrufe bei ihm ankommen können, dadurch gekennzeichnet, daß eine Verbindungsübertragung (VUe) mit nachgeschalteter Ansageeinrichtung (ANSE) vorgesehen ist, die von einem Teilnehmeranschluß (TA) aus durch Wahl einer besonderen Kennzahl oder durch mit einer Taste (T) erfolgende Abgabe eines Sonderkennzeichens nur dann erreicht wird, wenn der besondere Wählton angeschaltet ist, daß dann von einer zentralen Steuerung (ZST) der Verbindungsübertragung (VUe) alle für den bei diesem Vorgang identifizierten Teilnehmeranschluß (TA) aktivierten Sondermerkmale codiert übermittelt werden, daß diese Daten umgesetzt und wortparallel zur Ansageeinrichtung (ANSE) gesendet werden, woraus diese einen Ansagetext generiert, der dem Teilnehmer zugesprochen wird, und alle Angaben über aktivierte Sondermerkmale enthält.

2. Verfahren nach Anspruch 1, dadurch gekennzeichnet, daß dem Teilnehmer über die aufgebaute Verbindung alle für seinen Anschluß (TA) gültigen Berechtigungsklassen mitgeteilt werden.

3. Verfahren nach Anspruch 1, dadurch gekennzeichnet, daß dem Teilnehmer außerdem für seinen Anschluß eingetragene Zeit-Daten mit zugehöriger Erläuterung mitgeteilt werden.

4. Verfahren nach Anspruch 1, dadurch gekennzeichnet, daß dem Teilnehmer im Rahmen einer vorgegebenen Textansage die Rufnummer seines Anschlusses mitgeteilt wird.

5. Verfahren nach Anspruch 1, dadurch gekennzeichnet, daß die Ansageeinrichtung (ANSE) vierdrähtig an die Verbindungsübertragung (VUe) angeschlossen ist.

6. Verfahren nach Anspruch 1, dadurch gekennzeichnet, daß zur Übermittlung von den Teilnehmeranschluß (TA) betreffenden Daten von der Verbindungsübertragung (VUe) zur Ansageeinrichtung (ANSE) eine Sendeeinrichtung (S) und eine Empfangseinrichtung (E) vorgesehen sind, die nach dem für Tastwahl eingesetzten Mehrfrequenzverfahren (MFV) arbeiten.

7. Verfahren nach Anspruch 1, dadurch gekennzeichnet, daß die Verbindung von der Verbindungsübertragung (VUe) selbsttätig ausgelöst wird, wenn die Ansage beendet ist.

8. Verfahren nach Anspruch 7, dadurch gekennzeichnet, daß die Ansage mehrmals wiederholt werden kann, indem der Teilnehmer eine entsprechende Kennziffer nachwählt.

9. Verfahren nach Anspruch 1, dadurch gekennzeichnet, daß die Ansageeinrichtung (ANSE) eine Sprachsynthesesteuerung (SSY,SE) enthält, womit künstliche Sprache erzeugt wird.

**Claims**

1. Method for the notification of a telephone subscriber about the switching states existing for his connection, where in the subscriber receives a special dialling tone from a centrally controlled telephone exchange, in particular when no calls can arrive for him because of activated special features such as incoming-call protection or call diversion, characterised thereby, that a connection transmission (VUe) with downstream announcing equipment (ANSE) is provided, which is reached from a subscriber connection (TA) through selection of a special code number or through delivery of a special code sign taking place through depression of a key (T) only when the special dialling tone is switched on, that all special features activated for the subscriber connection (TA) identified in this process are transmitted in code from a central control (ZST) to the connection transmission (VUe), that these date are then sent, translated and word-parallel, to the announcing equipment (ANSE), from which this generates an announcement text which is spoken to the subscriber and contains all statements about activated special features.

2. Method according to claim 1, characterised thereby, that all entitlement classes valid for his connection (TA) are communicated to the subscriber by way of the established connection.

3. Method according to claim 1, characterised thereby, that time data entered for his connection are beyond that communicated to the subscriber with appropriate explanation.

4. Method according to claim 1, characterised thereby, that the subscriber's number of his connection is communicated to the subscriber in the frame of a text announcement.

5. Method according to claim 1, characterised thereby, that the announcing equipment (ANSE) is connected by four-wire line ot the connection transmission (VUe).

6. Method according to claim 1, characterised thereby, that a transmitting equipment (S) and a receiving equipment (E), which operate by the multifrequency method (MFV) used for key dialling, are provided for the transmission of data concerning the subscriber connection (TA) from the connection transmission (VUe) to the announcing equipment (ANSE).

7. Method according to claim 1, characterised thereby, that the connection from the connection transmission (VUe) is released automatically when the announcement is concluded.

8. Method according to claim 7, characterised thereby, that the announcement can be repeated several times in that the subscriber further dials a corresponding code number.

9. Method according to claim 1, characterised thereby, that the announcing equipment (ANSE) contains a speech synthesis control (SSY, SE), by which artificial speech is produced.

## Revendications

1. Procédé pour informer un abonné au téléphone des états de commutation actuels de son poste, par lequel l'abonné reçoit une tonalité particulière d'une installations de commutation à commande centrale, en particulier lorsqu'il ne peut recevoir aucun appel par suite de l'activation de particularités spéciales telles que la protection d'appel et la déviation d'appel, caractérisé en ce que
une unité de transmission de communication (VUe) est pourvue d'un dispositif d'annonce automatique (ANSE) postcommuté, qui peut être atteint à partir du poste d'abonné (TA) en formant un indicatif particulier ou en envoyant un code d'identification particulier par pression sur une touche (T) uniquement si la tonalité particulière est appliquée,
en ce que toutes les particularités spéciales activées destinées au poste d'abonné (TA) identifié dans ce processus sont transmises à l'unité de transmission de communication (VUe) sous forme codée à partir d'une commande centrale (ZST),
en ce que les données sont converties et envoyées au dispositif d'annonce automatique (ANSE) par transmission de mots en parallèle, le dispositif d'annonce automatique (ANSE) précité générant à partir de ces données un texte d'annonce qui se trouve dicté à l'abonné et qui contient toutes les informations concernant les particularités spéciales activées.

2. Procédé selon la revendication 1, caractérisé en ce que l'abonné reçoit communication de toutes les classes d'autorisation s'appliquant à son poste (TA) par l'intermédiaire de la communication établie.

3. Procédé selon la revendication 1, caractérisé en ce que l'abonné reçoit en outre communication de données de temps enregistrées pour son poste, avec explication correspondante.

4. Procédé selon la revendication 1, caractérisé en ce que l'abonné reçoit communication du numéro d'appel de son poste, dans le cas d'un message textuel dicté.

5. Procédé selon la revendication 1, caractérisé en ce que le dispositif d'annonce automatique (ANSE) est relié à l'unité de transmission de communication (VUe) par un câble quadrifilaire.

6. Procédé selon la revendication 1, caractérisé en ce que l'on prévoit un dispositif émetteur (S) et un dispositif récepteur (E) travaillant suivant le procédé multifréquence (MFV) utilisé pour la sélection par clavier, les dispositifs émetteur et récepteur précités étant destinés à la transmission entre l'utiné de transmission de communication (VUe) et le dispositif d'annonce automatique (ANSE), de données concernant le poste d'abonné (TA).

7. Procédé selon la revendication 1, caractérisé en ce qu'il est mis fin à la communication par l'unité de transmission de communication (VUe) lorsque le message d'annonce est terminé.

8. Procédé selon la revendication 7, caractérisé en ce que le message d'annonce peut être répété plusieurs fois lorsque l'abonné forme un indicatif correspondant.

9. Procédé selon la revendication 1, caractérisé en ce que le dispositif d'annonce automatique (ANSE) comporte un système de synthèse de la parole, par lequel est produite une voix artificielle.